# EUROPEAN PATENT APPLICATION

(11) **EP 1 811 785 A2**
(43) Date of publication of application: **25.07.2007**
(21) Application number: 07100036.8
(22) Date of filing: 02.01.2007
(51) Int. Cl.: H04N 7/26, H04N 7/28, H04N 7/50

(54) **Method and apparatus for video encoding/decoding based on orthogonal transform and vector quantization**

(30) Priority: 23.01.2006 KR 20060006805
(71) Applicant: SAMSUNG ELECTRONICS CO., LTD., Suwon-si, Gyeonggi-do 442-742 (KR)
(72) Inventor: SONG, Byung-cheol, Gyeonggi-do (KR)
(74) Representative: Davies, Robert Ean

(57) **Abstract**

Provided are a method and an apparatus for video encoding/decoding based on an orthogonal transform and vector quantization. A video encoding method includes determining (410) whether an input image is a residual image, if the input image is a residual image, performing (420) first encoding on the input image through transform/quantization and performing second encoding on the input image through vector quantization, comparing data obtained through the first encoding and data obtained through the second encoding, and selecting an encoding type based on the result of the comparison, generating (450) mode information indicating the selected encoding type, and outputting data obtained according to the selected encoding type.

## Description

Methods and apparatuses consistent with the present invention relate to video encoding and decoding, and more particularly, to video encoding/decoding based on an orthogonal transformation and vector quantization.

Conventional video codec standards such as moving picture experts group (MPEG)-2, MPEG-4, H.264, and VC1 use a discrete cosine transform (DCT) for video encoding and use wavelet transforms for the encoding of still images.

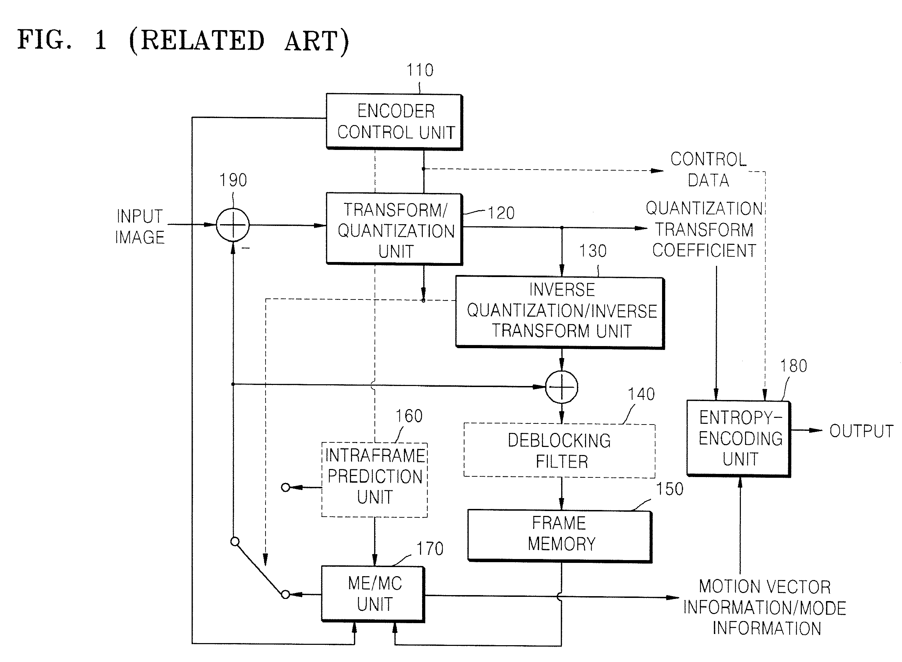

FIG. 1 is a block diagram of a related art video encoder such as an MPEG-2 encoder, an MPEG-4 encoder, or an H.264 encoder.

Input video data is divided into a plurality of 16×16 macroblocks.

An encoder control unit 110 serves as a bitrate controller to determine a quantization coefficient for each block so that a desired bitrate for the entire sequence and a target bit for each picture can be achieved.

A transform/quantization unit 120 transforms the input video data to remove the spatial redundancy of the input video data. The transform/quantization unit 120 quantizes transform coefficients obtained by transform encoding using a predetermined quantization step, thereby obtaining two-dimensional N×M data composed of the quantized transform coefficients. A DCT may be used as the transform. The quantization is performed using a predetermined quantization step.

An inverse quantization/inverse transform unit 130 inversely quantizes the video data that is quantized by the transform/quantization unit 120 and inversely transforms the inversely quantized video data using, for example, an inverse DCT (IDCT).

A deblocking filter 140 performs filtering to remove a blocking effect occurring in a motion-compensated image due to quantization and outputs the result of the filtering to a frame memory 150.

The frame memory 150 stores the video data that is inversely quantized/inversely transformed by the inverse quantization/inverse transform unit 130 in frame units.

An intraframe prediction unit 160 obtains a predictor for each block or macroblock in a spatial domain of an intra macroblock, obtains a difference between the obtained predictor and the intra macroblock, and transmits the difference to the transform/quantization unit 120.

A motion estimation/motion compensation (ME/MC) unit 170 estimates a motion vector (MV) and a sum of absolute differences (SAD) for each macroblock using input video data of a current frame and video data of a previous frame stored in the frame memory 150. The ME/MC unit 170 also generates a motion-compensated prediction area P, e.g., a 16×16 region selected by ME, based on the estimated MV.

An entropy-encoding unit 180 receives the quantized transform coefficients from the transform/quantization unit 120, motion vector information from the ME/MC unit 170, and information required for decoding such as coding type information and quantization step information from the encoder control unit 110, performs entropy-encoding, and outputs a final bitstream.

In other words, in the video encoder of FIG. 1, an addition unit 190 subtracts the motion-compensated prediction area P generated by the ME/MC unit 170 from an input current macroblock, thereby generating a residual image. The generated residual image undergoes an orthogonal transform, e.g., a DCT, and quantization through the transform/quantization unit 120. The entropy-encoding unit 180 entropy-encodes header information such as a coefficient for each macroblock, motion information, and control data output from the transform/quantization unit 120, thereby generating a compressed bitstream.

As such, the related art video encoder uses an orthogonal transform, e.g., a DCT, to transform the video. Such a transform improves compression efficiency for an intra block, but degrades compression efficiency for a residual block in an inter block. In particular, as the H.264 encoder encodes the intra block in the same manner as it encodes the residual block through intraprediction, the efficiency of a DCT may deteriorate in some cases.

Embodiments of the present invention provide a method and an apparatus for video encoding/decoding.

According to one aspect of the present invention, there is provided a video encoding method. The video encoding method includes determining whether an input image is a residual image, if the input image is a residual image, performing first encoding on the input image through transform/quantization and performing second encoding on the input image through vector quantization, comparing data obtained through the first encoding and data obtained through the second encoding, and selecting an encoding type based on the result of the comparison, generating mode information indicating the selected encoding type, and outputting data obtained according to the selected encoding type.

The comparison of the data may include comparing the bitrate of the data obtained through the first encoding and the bitrate of the data obtained through the second encoding.

The bitrate of the data obtained through the first encoding or the second encoding may be calculated after entropy-encoding of the data.

The comparison of the data may include comparing the rate of distortion of the data obtained through the first encoding and the rate of distortion of the data obtained through the second encoding.

If the input image is not the residual image, only the first encoding may be performed on the input image.

The video encoding method may further include performing entropy-encoding on the output data and the generated mode information.

The transform may be an orthogonal transform.

According to another aspect of the present invention, there is provided a video encoder including a determination unit, a first encoding unit, a second encoding unit, a comparison unit, and a mode selection unit. The determination unit determines whether an input image is a residual image. The first encoding unit performs transform/quantization on the input image.

The second encoding unit performs vector quantization on the input image if the input image is a residual image. The comparison unit compares data obtained by the first encoding unit and data obtained by the second encoding unit. The mode selection unit selects an encoding type based on the result of the comparison, generates mode information indicating the selected encoding type, and outputs data obtained according to the selected encoding type.

According to still another aspect of the present invention, there is provided a video decoding method. The video decoding method includes performing entropy-decoding on an input bitstream to extract video data, motion information, and mode information indicating an encoding type of an input image from the entropy-decoded bitstream, performing first decoding on the extracted video data through inverse quantization/inverse transform or second decoding on the extracted video data through inverse vector quantization based on the extracted mode information, and adding video data that is motion-compensated or intraprediction-decoded using the extracted motion information to the decoded video data, thereby generating reconstructed video data.

According to yet another aspect of the present invention, there is provided a video decoder including an entropy-decoding unit, a first decoding unit, a second decoding unit, and a video reconstruction unit. The entropy-decoding unit performs entropy-decoding on an input bitstream to extract video data, motion information, and mode information indicating an encoding type of an input image from the entropy-decoded bitstream. The first decoding unit performs first decoding on the extracted video data through inverse quantization/inverse transform based on the extracted mode information. The second decoding unit performs second decoding on the extracted video data through inverse vector quantization based on the extracted mode information. The video reconstruction unit adds video data that is motion-compensated or intraprediction-decoded using the extracted motion information to the decoded video data, thereby generating reconstructed video data.

According to yet another aspect of the present invention, there is provided a computer-readable recording medium having recorded thereon a program for performing a video encoding method. The video encoding method includes determining whether an input image is a residual image, if the input image is a residual image, performing first encoding on the input image through transform/quantization and performing second encoding on the input image through vector quantization, comparing data obtained through the first encoding and data obtained through the second encoding, and selecting an encoding type based on the result of the comparison, generating mode information indicating the selected encoding type, and outputting data obtained according to the selected encoding type.

According to yet another aspect of the present invention, there is provided a computer-readable recording medium having recorded thereon a program for performing a video decoding method. The video decoding method includes performing entropy-decoding on an input bitstream to extract video data, motion information, and mode information indicating an encoding type of an input image from the entropy-decoded bitstream, performing first decoding on the extracted video data through inverse quantization/inverse transform or second decoding on the extracted video data through inverse vector quantization based on the extracted mode information, and adding video data that is motion-compensated or intraprediction-decoded using the extracted motion information to the decoded video data, thereby generating reconstructed video data.

For a better understanding of the invention, and to show how embodiments of the same may be carried into effect, reference will now be made, by way of example, to the accompanying diagrammatic drawings in which:
FIG. 1 is a block diagram of a related art video encoder;
FIG. 2 is a block diagram of a video encoder according to an exemplary embodiment of the present invention;
FIGS. 3A and 3B are views for explaining a vector quantization mode according to an exemplary embodiment of the present invention;
FIG. 4 is a flowchart illustrating a video encoding method used in the video encoder of FIG. 2 according to an exemplary embodiment of the present invention;
FIG. 5 is a block diagram of a video decoder according to an exemplary embodiment of the present invention; and
FIG. 6 is a flowchart illustrating a video decoding method used in the video decoder of FIG. 5 according to an exemplary embodiment of the present invention.

Hereinafter, exemplary embodiments of the present invention will be described in detail with reference to the accompanying drawings.

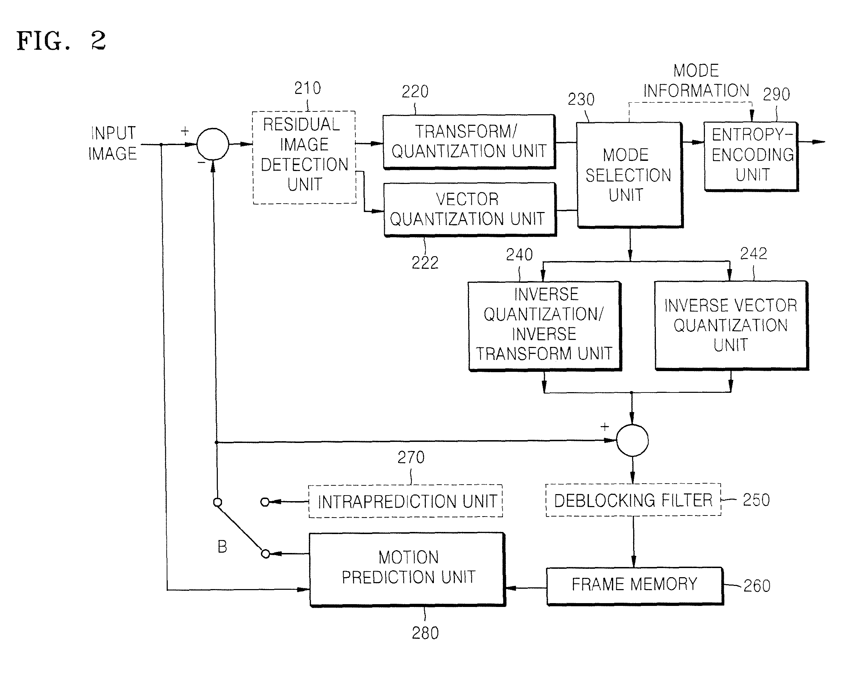

FIG. 2 is a block diagram of a video encoder according to an exemplary embodiment of the present invention.

A deblocking unit 250, a frame memory 260, an intraprediction unit 270, and a motion prediction unit 280 of the video encoder of FIG. 2 function in the same way as corresponding functional units of the related art video encoder of FIG. 1 and a description thereof will not be provided for simplicity of explanation.

A residual image detection unit 210 determines whether an input image is a residual image encoded according to an interprediction mode or an intraprediction mode. The residual image according to the interprediction mode refers to a difference between a current image and a motion-compensated prediction area.

If the input image is a residual image, the residual image detection unit 210 outputs the input image to a transform/quantization unit 220 and a vector quantization unit 222. The transform/quantization unit 220 performs an orthogonal transform such as a discrete cosine transform (DCT).

If the input image is not a residual image, for example, if it is the original image, the residual image detection unit 210 outputs the input image to the transform/quantization unit 220.

If there is an output from the vector quantization unit 222, a mode selection unit 230 calculates the number of bits of the residual image that has been vector-quantized by the vector quantization unit 222 and the number of bits of the residual image that has been transformed/quantized by the transform/quantization unit 220. The mode selection unit 230 selects one of a vector quantization mode, i.e., the vector-quantized residual image, and a transform/quantization mode, i.e., the transformed/quantized residual image, based on the calculated numbers of bits, and outputs the selected residual image and corresponding mode information to an entropy-encoding unit 290. The mode selection unit 230 also outputs the selected residual image to one of an inverse quantization/inverse transform unit 240 and an inverse vector quantization unit 242. The mode selection unit 230 may also entropy-encode the transformed/quantized residual image and the vector quantized residual image, compare the numbers of bits of the entropy-encoded residual images, and select a mode having the smaller number of bits.

The mode selection unit 230 may also calculate the rate-distortion cost of the transformed/quantized residual image and the rate-distortion cost of the vector quantized residual image and select a mode having the smaller rate-distortion cost. The rate-distortion cost may be obtained by comparing the result of inverse quantization/inverse transform of the transformed/quantized residual image or the result of inverse vector quantization of the vector quantized residual image with the original residual image.

For example, when the transform/quantization mode is selected, the mode selection unit 230 outputs quantized coefficients and the output quantized coefficients undergo zigzag scanning and then entropy-encoding through the entropy-encoding unit 290. The mode information indicating the transform/quantization mode is also output to the entropy-encoding unit 290 and undergoes entropy-encoding.

When the vector quantization mode is selected, the mode selection unit 230 outputs index information of a codebook having an image pattern that is most similar to the pattern of the input image and the output index information is entropy-encoded.

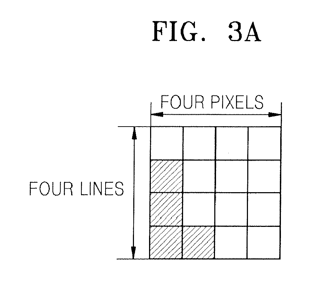

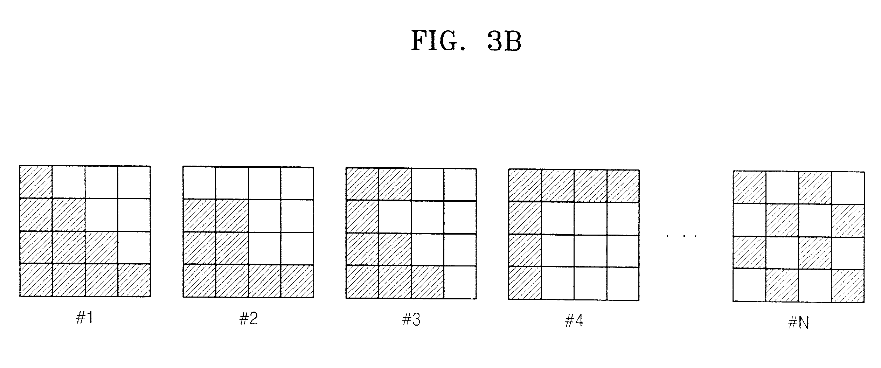

FIGS. 3A and 3B are views for explaining the vector quantization mode according to an exemplary embodiment of the present invention. FIG. 3A illustrates a pixel block of the input image and FIG. 3B illustrates a group of codebooks having representative image patterns.

During vector quantization, the original pixel block, i.e., the pixel block of FIG. 3A, is mapped to a codebook having the most similar image pattern. In FIGS. 3A and 3B, a codebook #2 having the most similar image pattern to the input pixel block is selected and an index '2' indicating the codebook #2 is transmitted.

Although the residual image detection unit 210 determines the type of input image and determines whether to perform vector quantization according to the result of determination in the current exemplary embodiment of the present invention, vector quantization may also be performed on all input images.

Moreover, only when the residual image detection unit 210 determines that the input image is a residual image, the mode selection unit 230 can compare the outputs of the transform/quantization unit 220 and the vector quantization unit 222 for selection.

The mode selection unit 230 outputs video data to the inverse quantization/inverse transform unit 240 or the inverse vector quantization unit 242 according to the selected mode.

Data reconstructed by the inverse quantization/inverse transform unit 240 and the inverse vector quantization unit 242 is stored in the frame memory 260.

As such, in the current exemplary embodiment of the present invention, during video encoding for removing spatial redundancy, if the input image is a residual image, transform/quantization and vector quantization are adaptively used, thereby improving encoding efficiency.

Although the transform/quantization unit 220 uses an orthogonal transform such as a DCT for video transform in the current exemplary embodiment of the present invention, it may also use another orthogonal transform such as integer transform. Tree-based vector quantization, classified vector quantization, or predictive vector quantization may be used for vector quantization.

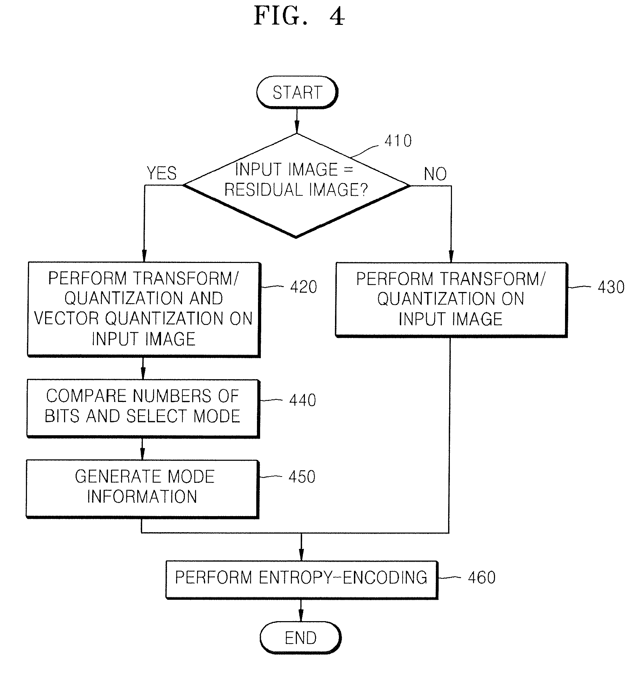

FIG. 4 is a flowchart illustrating a video encoding method used in the video encoder of FIG. 2 according to an exemplary embodiment of the present invention.

In operation 410, it is determined whether an input image is a residual image according to an interprediction mode or an intraprediction mode.

In operation 420, if the input image is a residual image, transform/quantization and vector quantization are performed on the input image.

In operation 430, if the input image is not a residual image, for example, is the original image, transform/quantization is performed on the input image.

In operation 440, the number of bits of the transformed/quantized residual image obtained in operation 420 and the number of bits of the vector quantized residual image obtained in operation 420 are calculated and the calculated numbers of bits are compared to select one of a vector quantization mode and a transform/quantization mode.

In operation 450, mode information indicating the selected mode obtained in operation 440 is generated.

In operation 460, entropy-encoding is performed on the generated mode information obtained in operation 450 and on the transformed/quantized video data or the vector quantized video data corresponding thereto, or entropy-encoding is performed on the transformed/quantized video data obtained in operation 430.

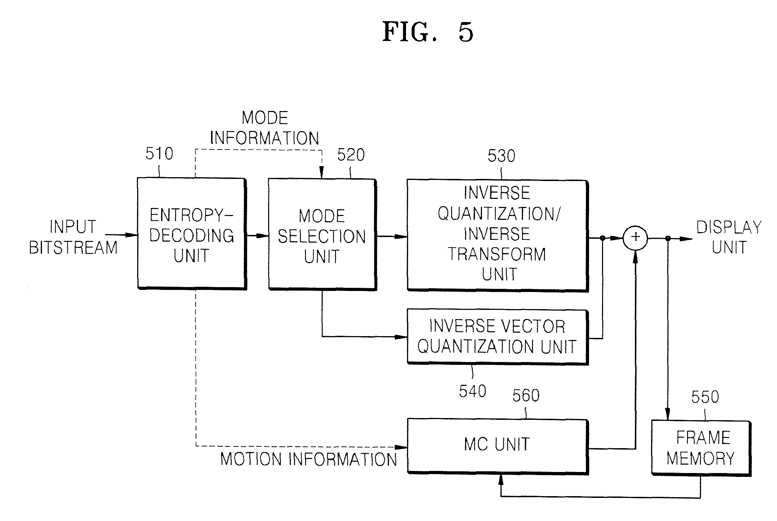

FIG. 5 is a block diagram of a video decoder according to an exemplary embodiment of the present invention.

Referring to FIG. 5, the video decoder includes an entropy decoding unit 510, a mode selection unit 520, an inverse quantization/inverse transform unit 530, an inverse vector quantization unit 540, a frame memory 550, and an MC unit 560.

The entropy decoding unit 510 entropy-decodes an input encoded bitstream to extract video data, motion vector information, and mode information indicating whether the video data is transformed/quantized data or vector quantized data. The extracted video data and mode information are input to the mode selection unit 520 and the extracted motion vector information is input to the MC unit 560.

The mode selection unit 520 outputs the input video data to the inverse quantization/inverse transform unit 530 or the inverse vector quantization unit 540 according to the input mode information.

For example, if the input mode information indicates that the input video data is vector quantized data, the input video data undergoes inverse vector quantization through the inverse vector quantization unit 540. A predictor, e.g., a motion-compensated prediction area obtained by the MC unit 560, is added to the inverse vector quantized video data, thereby generating reconstructed video data. The reconstructed video data is output to a display unit (not shown).

If the input mode information indicates that the input video data is transformed/quantized data, the input video data undergoes inverse quantization/inverse transform through the inverse quantization/inverse transform unit 530. A predictor, e.g., a motion-compensated prediction area obtained by the MC unit 560, is added to the inversely quantized/inversely transformed video data, thereby generating reconstructed video data. The reconstructed video data is output to a display unit (not shown).

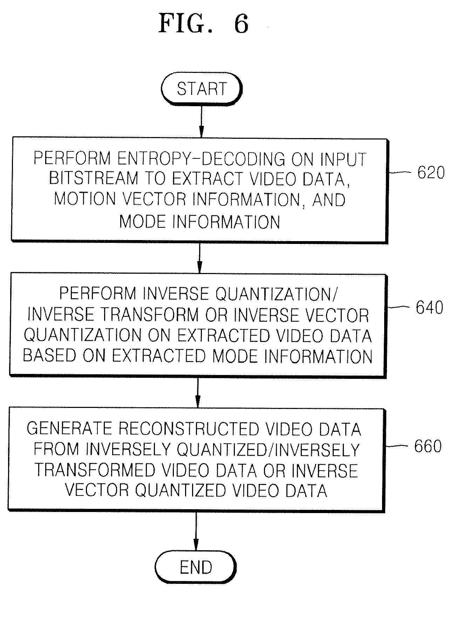

FIG. 6 is a flowchart illustrating a video decoding method used in the video decoder of FIG. 5 according to an exemplary embodiment of the present invention.

In operation 620, an input encoded bitstream is entropy decoded to extract video data, motion vector information, and mode information indicating whether the video data is transformed/quantized data or vector quantized data.

In operation 640, inverse quantization/inverse transform or inverse vector quantization is performed on the extracted video data according to the extracted mode information.

In operation 660, a predictor e.g., a motion-compensated prediction area obtained by the MC unit 560, is added to the inversely quantized/inversely transformed video data or the inverse vector quantized video data, thereby generating reconstructed video data.

As described above, according to exemplary embodiments of the present invention, during video encoding for removing spatial redundancy, if an input image is a residual image, encoding efficiency can be improved.

Meanwhile, the present invention can also be embodied as computer-readable code on a computer-readable recording medium. The computer-readable recording medium is any data storage device that can store data which can be thereafter read by a computer system. Examples of the computer-readable recording medium include read-only memory (ROM), random-access memory (RAM), CD-ROMs, magnetic tapes, floppy disks, optical data storage devices, and carrier waves (e.g., transmission over the Internet). The computer-readable recording medium can also be distributed over network coupled computer systems so that the computer-readable code is stored and executed in a distributed fashion.

While the present invention has been particularly shown and described with reference to the exemplary embodiments thereof, it will be understood by those of ordinary skill in the art that various changes in form and details may be made therein without departing from the spirit and scope of the present invention as defined by the following claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A video encoding method comprising:
determining (410) whether an input image is a residual image;
if the input image is the residual image, performing (420) first encoding on the input image through transform/quantization and performing second encoding on the input image through vector quantization;
comparing (440) first data obtained through the first encoding and second data obtained through the second encoding; and
selecting an encoding type based on a result of the comparison, generating (450) mode information indicating the selected encoding type, and outputting third data obtained according to the selected encoding type.

2. The video encoding method of claim 1, wherein the comparison of the first and second data comprises comparing a first bitrate of the first data and a second bitrate of the second data.

3. The video encoding method of claim 1 or 2, further comprising performing (460) entropy encoding on the first-encoded input image and the second-encoded input image before the comparison of the first and second data,
wherein the comparison of the first and second data comprises comparing a first bitrate of the first-encoded input image on which the entropy encoding is performed, and a second bitrate of the second-encoded input image on which the entropy encoding is performed.

4. The video encoding method of any preceding claim, wherein the comparison of the first and second data comprises comparing a first rate-distortion cost of the first data and a second rate-distortion cost of the second data.

5. The video encoding method of claim 4, wherein the first and second rate-distortion costs are obtained by performing inverse transform/quantization on the first-encoded input image and inverse vector quantization on the second-encoded input image, respectively.

6. The video encoding method of any preceding claim, wherein if the input image is not the residual image, only the first encoding is performed (430) on the input image.

7. The video encoding method of any preceding claim, further comprising performing entropy-encoding on the third data and the generated mode information.

8. The video encoding method of claim 7, wherein:
if the selected encoding type is the transform/quantization, the third data comprises quantized coefficients, and zigzag scanning is performed on the third data before the entropy-encoding is performed on the third data; and
if the selected encoding type is the vector quantization, the third data comprises index information of a codebook having an image pattern that is most similar to a pattern of the input image, and the entropy-encoding is performed on the index information.

9. The video encoding method of any preceding claim, wherein the transform comprises an orthogonal transform.

10. A video encoder comprising:
a determination unit (210) which determines whether an input image is a residual image;
a first encoding unit (220) which performs transform/quantization on the input image;
a second encoding unit (222) which performs vector quantization on the input image if the input image is a residual image;
a comparison unit which compares first data obtained by the first encoding unit and second data obtained by the second encoding unit; and
a mode selection unit (230) which selects an encoding type based on a result of the comparison, generates mode information indicating the selected encoding type, and outputs third data obtained according to the selected encoding type.

11. The video encoder of claim 10, wherein the comparison unit compares a first bitrate of the first data and a second bitrate of the second data.

12. The video encoder of claim 10 or 11, further comprising an entropy encoding unit (290) which performs entropy encoding on the first-encoded input image and the second-encoded input image before the comparison of the first and second data,
wherein the comparison of the first and second data comprises comparing a first bitrate of the first-encoded input image on which the entropy encoding is performed, and a second bitrate of the second-encoded input image on which the entropy encoding is performed.

13. The video encoder of any of claims 10-12, wherein the comparison unit compares a first rate-distortion cost of the first data and a second rate-distortion cost of the second data.

14. The video encoder of claim 13, further comprising an inverse quantization/inverse transform unit (240) which performs inverse transform/quantization, and an inverse vector quantization unit (242) which performs inverse vector quantization,
wherein the first and second rate-distortion costs are obtained by performing the inverse transform/quantization on the transform/quantized input image and the inverse vector quantization on the vector quantized input image, respectively.

15. The video encoder of any of claims 10-14, wherein if the input image is not the residual image, only the transformation and quantization are performed on the input image.

16. The video encoder of any of claims 10-15, further comprising an entropy encoding unit which performs entropy-encoding on the third data and the generated mode information.

17. The video encoder of claim 16, wherein:
if the selected encoding type is the transform/quantization, the third data comprises quantized coefficients, and zigzag scanning is performed on the third data before the entropy-encoding in performed on the third data; and
if the selected encoding type is the vector quantization, the third data comprises index information of a codebook having an image pattern that is most similar to a pattern of the input image, and the entropy-encoding is performed on the index information.

18. The video encoder of any of claims 10-17, wherein the transform comprises an orthogonal transform.

19. A video decoding method comprising:
performing (620) entropy-decoding on an input bitstream comprising video data, motion information, and mode information indicating an encoding type of an input image;
performing (640) first decoding on the video data through inverse quantization/inverse transform or second decoding on the video data through inverse vector quantization based on the mode information; and
adding video data that is motion-compensated or intraprediction-decoded using the motion information to the decoded video data, thereby generating reconstructed video data.

20. The video decoding method of claim 19, wherein if the input image is a residual image, the mode information indicates the encoding type of the input image, and
wherein the encoding type is selected by performing first encoding on the input image through transform/quantization, performing second encoding on the input image through vector quantization, and comparing first data obtained through the first encoding and second data obtained through the second encoding.

21. The video decoding method of claim 20, wherein the comparison of the data comprises comparing a first bitrate of the first data and a second bitrate of the second data.

22. The video decoding method of claim 20 or 21, wherein the comparison of the first and second data comprises comparing a first bitrate of the first-encoded input image on which entropy encoding is performed, and a second bitrate of the second-encoded input image on which entropy encoding is performed.

23. The video decoding method of any of claims 20-22, wherein the comparison of the first and second data comprises comparing a first rate-distortion cost of the first data and a second rate-distortion cost of the second data.

24. The video decoding method of any of claims 19-23, wherein the inverse transform comprises an inverse orthogonal transform.

25. A video decoder comprising:
an entropy-decoding unit (510) which performs entropy-decoding on an input bitstream comprising video data, motion information, and mode information indicating an encoding type of an input image;
a first decoding unit (530) which performs first decoding on the video data through inverse quantization/inverse transform based on the mode information;
a second decoding unit (540) which performs second decoding on the video data through inverse vector quantization based on the mode information; and
a video reconstruction unit which adds video data that is motion-compensated or intraprediction-decoded using the motion information to the decoded video data, thereby generating reconstructed video data.

26. The video decoder of claim 25, wherein if the input image is a residual image, the mode information indicates the encoding type of the input image, and
wherein the encoding type is selected by performing first encoding on the input image through transform/quantization, performing second encoding on the input image through vector quantization, and comparing first data obtained through the first encoding and second data obtained through the second encoding.

27. The video decoder of claim 26, wherein the comparison of the data is performed by comparing a first bitrate of the first data and a second bitrate of the second data.

28. The video decoder of claim 26 or 27, wherein the comparison of the first and second data comprises comparing a first bitrate of the first-encoded input image on which entropy encoding is performed, and a second bitrate of the second-encoded input image on which entropy encoding is performed.

29. The video decoder of any of claims 26-28, wherein the comparison of the first and second data is performed by comparing a first rate-distortion cost of the first data and a second rate-distortion cost of the second data.

30. The video decoder of any of claims 25-29, wherein the inverse transform comprises an inverse orthogonal transform.

31. A computer-readable recording medium having recorded thereon a program for performing a video encoding method comprising:
determining whether an input image is a residual image;
if the input image is the residual image, performing first encoding on the input image through transform/quantization and performing second encoding on the input image through vector quantization;
comparing first data obtained through the first encoding and second data obtained through the second encoding; and
selecting an encoding type based on a result of the comparison, generating mode information indicating the selected encoding type, and outputting third data obtained according to the selected encoding type.

32. A computer-readable recording medium having recorded thereon a program for performing a video decoding method comprising:
performing entropy-decoding on an input bitstream comprising video data, motion information, and mode information indicating an encoding type of an input image;
performing first decoding on the video data through inverse quantization/inverse transform or second decoding on the video data through inverse vector quantization based on the mode information; and
adding video data that is motion-compensated or intraprediction-decoded using the motion information to the decoded video data, thereby generating reconstructed video data.
